# EUROPEAN PATENT APPLICATION

(11) **EP 1 936 965 A1**
(43) Date of publication of application: **25.06.2008**
(21) Application number: 07120955.5
(22) Date of filing: 19.11.2007
(51) Int. Cl.: H04N 5/445, H04N 7/24

(54) **Display apparatus**

(30) Priority: 20.12.2006 KR 20060130543
(71) Applicant: Samsung Electronics Co., Ltd, Suwon-si, Gyeonggi-do 442-742 (KR)
(72) Inventor: Lee, Dong-kwan, Seoul (KR); Lee, Jong-hyuk, Gyeonggi-do (KR)
(74) Representative: Hewett, Jonathan Michael Richard

(57) **Abstract**

A display apparatus, including: a receiving part which receives a transport stream comprising digital video and supplementary information; a transport demultiplexer which processes the received transport stream; a display part which displays a video based on the processed transport stream supplementary information, and a control part which controls the transport processing part to extract and display a channel list information having plurality of programs and information related to whether a data signal corresponding to the channel list information is included from the received supplementary information to the display part.

## Description

Display apparatuses and information display methods thereof consistent with the present invention relate to displaying an existence of service information.

Generally, a display apparatus receives a video signal, and performs a video process so that a visible image can be displayed. Recently, as a digital broadcasting begins, a broadcasting station broadcasts the video signal including a signal about a data service. The data service supplies supplementary information about a program to improve convenience of a user.

Here, the received video signal selectively contains a data service corresponding to a program. Accordingly, before a user selects a wanted program and inputs for executing of a data service, the user is incapable of knowing whether there is the data service corresponding to the selected program or not.

Accordingly, only if a user selects a channel to view a wanted program, a conventional display apparatus displays whether there is a data service corresponding to the selected channel or not.

However, in the conventional display device, to confirm whether there is the data service or not, the user should inconveniently select channels that have to be confirmed one by one.

Accordingly, it is an aspect of the present invention to provide a display apparatus and an information display method thereof extracting and displaying information about inclusion of a data service with respect to each channel together with a channel contents information, thereby conveniently confirming an existence of the data service corresponding to each channel.

The foregoing and/or other aspects of the present invention can be achieved by providing a display apparatus, comprising: a receiving part which receives a video signal which comprises a supplementary information; a video processing part which performs a video process with respect to the received video signal; a display part which displays a video based on the processed video signal, and a control part which controls the video processing part to extract and display a channel list information having plurality of channels and information relates to whether a data signal corresponding to the channel list information is included from the received supplementary information to the display part.

According to the embodiment of the present invention, the channel list information comprises a program guide information.

According to the embodiment of the present invention, the channel list information is received through a separate channel.

According to the embodiment of the present invention, the control part periodically extracts and displays the information relates to an inclusion of the data signal.

According to the embodiment of the present invention, the display apparatus further comprises a user input part, wherein the control part controls the video processing part to extract and display information relates to whether a channel which is inputted through the user input part among the plurality of channel listed in the channel list information comprises the data signal or not to the display part.

According to the embodiment of the present invention, the display apparatus further comprises a user interface (UI) generating part, wherein the control part controls the UI generating part to generate a UI including whether the extracted data signal is included, and to display the UI to the display part.

According to the embodiment of the present invention, the control part controls the UI generating part to generate a UI which corresponds to a program guide information, and to display the UI including whether the extracted data signal is included to the UI which corresponds to the program guide information.

According to the embodiment of the present invention, the control part controls the UI generating part to generate a UI which corresponds to a channel information, and to display the UI including whether the extracted data signal is included to the UI which corresponds to the channel information.

According to the embodiment of the present invention, a transmitting standard of the data signal comprises one of an advanced common application platform (ACAP), an open cable application platform (OCAP) and a multimedia home platform (MHP).

The foregoing and/or other aspects of the present invention can be achieved by providing an information display method of a display apparatus, comprising: receiving a video signal which comprises a supplementary information; extracting a channel list information having a plurality of channels and information related to whether a data signal corresponding to the plurality of channels listed in the channel list information is included from the received supplementary information; and displaying the extracted channel list information and the information related to whether the data signal is included.

According to the embodiment of the present invention, the channel list information comprises a program guide information.

According to the embodiment of the present invention, the channel list information is received through a separate channel.

According to the embodiment of the present invention, extracting the channel list information comprises periodically extracting the information related to an inclusion of the data signal.

According to the embodiment of the present invention, the displaying the extracted information comprises displaying a user interface (UI) including whether the extracted data signal is included.

According to the embodiment of the present invention, the displaying the extracted information comprises displaying the UI including whether the extracted data signal is included to a UI which corresponds to a program guide information.

According to the embodiment of the present invention, the displaying the extracted information comprises displaying the UI including whether the extracted data signal is included to a UI which corresponds to a channel information.

According to the embodiment of the present invention, a transmitting standard of the data signal comprises one of an advanced common application platform (ACAP), an open cable application platform (OCAP) and a multimedia home platform (MHP).

The above and/or other aspects of the prevent invention will become apparent and more readily appreciated from the following description of the exemplary embodiments, taken in conjunction with the accompanying drawings, in which:
Figures 1 and 2 are block diagrams illustrating display apparatuses according to exemplary embodiments of the present invention;
Figures 3A and 3B illustrate a user interface of the display apparatus according to the exemplary embodiment of the present invention; and
Figure 4 is a flowchart illustrating an information display method of the display apparatus according to the exemplary embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

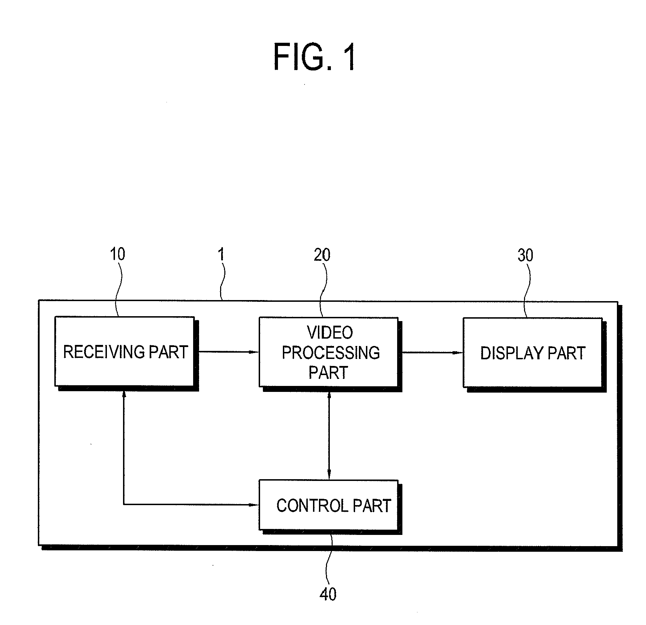

As shown in Figure 1, a display apparatus 1 according to a first exemplary embodiment of the present invention comprises a receiving part 10, a video processing part 20, a display part 30 and a control part 40. The display apparatus 1 may be embodied as a digital TV being capable of supporting a data service.

The receiving part 10 receives a video signal including supplementary information, and may include a tuner. Here, the supplementary information may include data service information as an additional information about a program. Besides, the supplementary information may include program information and system information.

The video processing part 20 performs a video process with respect to the received video signal. The video processing part 20 according to the present exemplary embodiment may perform decoding for extracting video information from an input video signal, scaling for adjusting resolution of the decoded video according to property of the display part 30 and setting of a user, a picture enhancement for enhancing quality of video, etc.

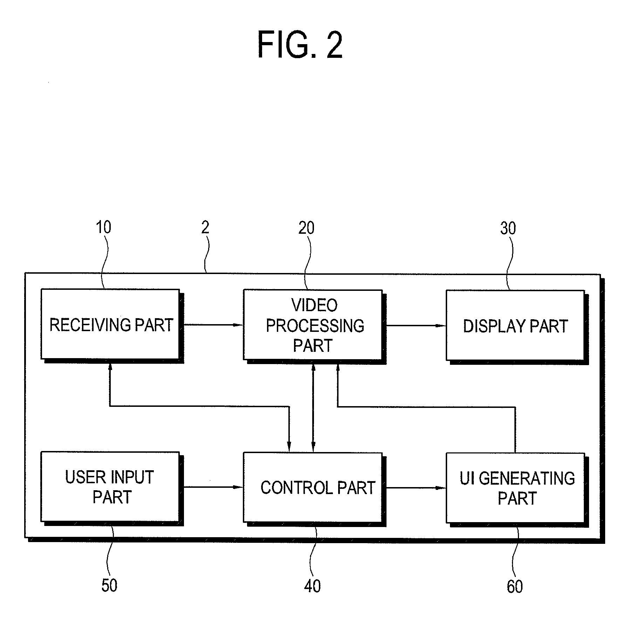

Also, the video processing part 20 may receive a user interface (UI) image generated by a UI generating part 60, and generate a video including the UI image to be displayed to the display part 30 depending on control of the control part 40 (Figure 2).

The display part 30 display a video based on the video signal processed by the video processing part 20. The display part 30 may include a cathode ray tube (CRT), a liquid crystal display (LCD), a plasma display panel (PDP), a digital light processing (DLP) device, a surface conduction electron emitter display (SED), a field emission display (FED), etc.

The control part 40 controls the video processing part 20 to extract channel list information for a plurality of channels and information about the inclusion of a data signal corresponding to a channel,, from the supplementary information received by the receiving part 10, and controls the display part 30 to display the channel list information and the information about the inclusion of a corresponding data signal.

An open cable standard among standards of a display apparatus, includes a view restricting function of a video signal in a cable card separate from a display apparatus. The display apparatus 1 according to the present embodiment exemplarily employs the open cable standard. A process in which the control part 40 determines whether the service data exists, will be described in the case of in-band information, where the cable card does not exist, and in the case of out-of-band information, where the cable card exists.

In the case of in-band information, the control part 40 receives a program map table (PMT) data from the supplementary information included to the video signal. Then, the control part 40 determines whether a basic stream having a service type information value 0x05 is included in the PMT data of the channels listed in the channel list information. Here, the channel list information having the plurality of channels may include an electric program guide (EPG) information.

A service type information value of 0x05 means that an application information table (AIT) data exists. If the AIT data exists, the data service is included. Accordingly, the control part 40 can control the display part 30 to indicate that the data service is included with respect to each channel listed in the channel list information.

In the case of out-of-band information, the control part 40 receives an extended application information table (XAIT) data from the video signal. Here, availabilities of the data service for the plurality of channels listed in the channel list information may be received through a separate channel. Since a table ID of the XAIT data is 0x74 and a program ID of the XAIT data is 0x1ffc, it is preferable but not necessary for the control part 40 to change setting of the receiving part 10 in order to receive the XAIT data.

Receiving the XAIT data means that the data service exists. Accordingly, the control part 40 can inform a user of the existence of the data service with respect to each channel by indicating whether the data service exists together with the channel list information in the display part 30 determined through a receiving of the XAIT data.

Accordingly, the user can easily confirm existence of the data service with respect to each channel through the channel list information.

Alternatively, the data service may have a data standard such as an advanced common application platform (ACAP), a multimedia and hypermedia information coding experts group (MHEG), a multimedia home platform (MHP), etc. as well as an open cable application platform (OCAP).

Figure 2 is a block diagram illustrating a configuration of a display apparatus 2 according to a second exemplary embodiment of the present invention. As shown in Figure 2, a display apparatus 2 according to a second exemplary embodiment of the present invention further comprises a user input part 50 and a user interface (UI) generating part 60.

The user input part 50 receives information regarding a channel selected through a channel list displayed by the a display part 30. The user input part 50 according to the present exemplary embodiment may be provided to a side of a main body of the display apparatus 2. Alternatively, the user input part 50 may comprise a wireless remote controller, and may comprise a menu key provided to the wireless remote controller and a key signal generating part generating a key signal to correspond to an operation of the key.

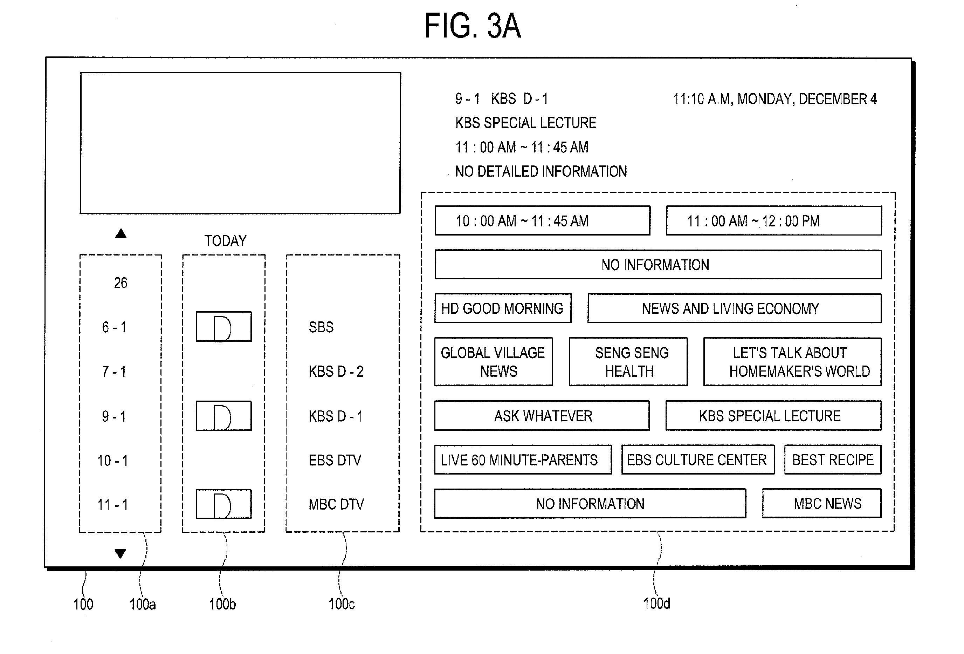

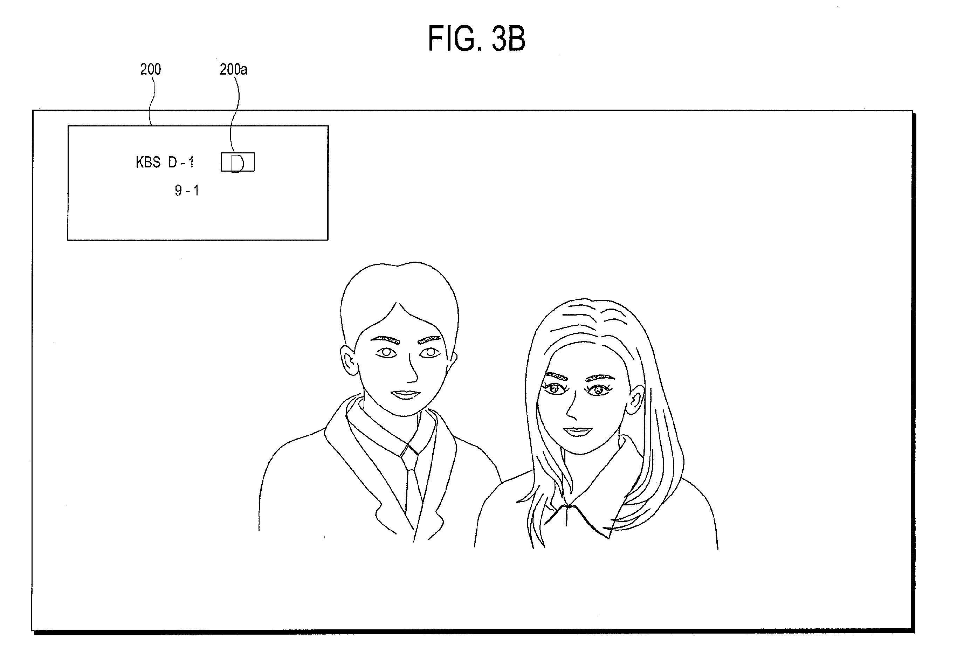

The UI generating part 60 generates a UI according to whether a data signal is included. Hereinafter, a user interface of the display apparatus 2 according to the present invention will be described by referring to Figures 3A and 3B.

As shown in Figure 3A, a user interface 100 of the display apparatus 2 according to the present invention comprises a channel interface 100a, a data signal interface 100b displaying whether a data signal is included, a broadcasting station interface 100c corresponding to a channel, and a program interface 100d displaying a program information.

If a cable card is mounted, the control part 40 determines whether the data signal corresponding to each channel exists according to the service type of the PMT data. If the cable card is not mounted, the control part 40 determines whether the data signal exists according to an existence of the XAIT data. Accordingly, if the data signal exists, the control part 40 displays a predetermined image in the data signal interface 100b.

To correctly provide information on the existence of the data signal, the control part 40 may periodically determine the existence of the data signal by a predetermined period of time, and display the data signal interface 100b in the display part 30.

Figure 3B illustrates a user interface 200 in case that a user selects a specific channel through the channel list information listing a plurality of channels. As shown in Figure 3B, in case of selecting a specific channel, a user interface 200 displays a name of a broadcasting station and a channel information when the channel is selected. If the data signal is included to the video signal corresponding to the selected channel, the user interface 200 comprises an interface 200a for displaying the inclusion of the data signal. Accordingly, a user conveniently confirms whether the data service exists in the selected channel without a separate input for executing the data service.

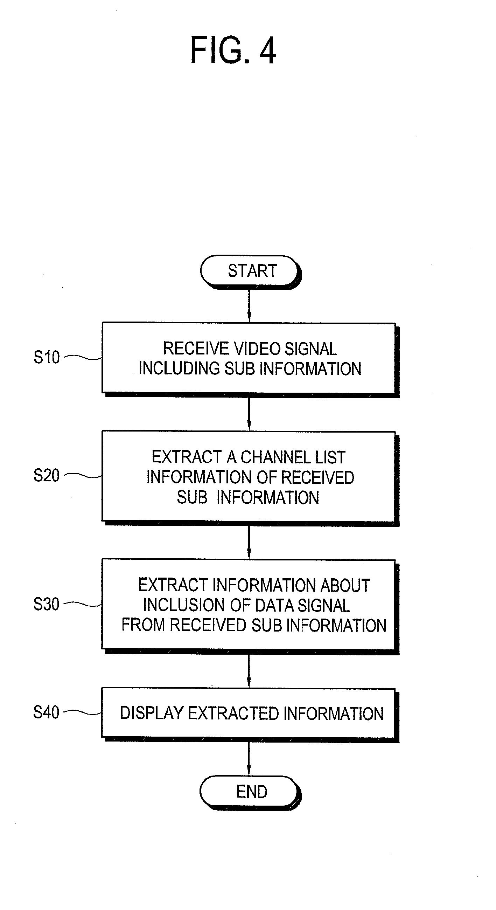

Hereinafter, an information displaying method of the display apparatuses 1 and 2 according to the present invention will be described by referring to Figure 4.

At first, the control part 40 controls the receiving part 10 to receive the video signal including the supplementary information (S10). Then, the control part 40 extracts the channel list information from the received supplementary information (S20), and extracts information about whether the data signal corresponding to the channel listed in the channel list information is included, from the received supplementary information (S30). Here, the channel list information may include the electric program guide (EPG) information, and be received through a separate channel in the case of the open cable standard.

At S20, the control part 40 may periodically extract the information about inclusion of the data signal, thereby correctly providing the information on the existence of the data signal.

Then, the control part 40 displays the extracted information in the display part 30 (S40). Here, the control part 40 may display the existence of the data signal through a UI image generated by the UI generating part 60.

As described above, the embodiments of the present invention provides a display device and an information display method thereof for extracting and displaying information about whether a data service with respect to each channel is included together with a channel list information, thereby conveniently allowing a user to confirm whether the data service corresponding to each channel exists.

Also, in selecting a channel, if a data service is automatically executed, a data service that is not wanted can be prevented from being executed, thereby preventing an unnecessary overhead.

Also, the data service can be requested from a channel of a broadcasting station not supporting a data service.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. A display apparatus, comprising:
means (10) for receiving a video signal;
a processor (20) for processing the received video signal; and
a display (30) for displaying a video based on the processed video signal,
in which the processor (20) is arranged to extract a channel list from the video signal and to output to the display a signal indicating whether service information corresponding to a channel on the channel list is included in the received video signal.

2. The display apparatus according to claim 1, wherein the channel list comprises program guide information.

3. The display apparatus according to claim 2, wherein channel list information is received through a separate channel from the video signal.

4. The display apparatus according to claim 1, wherein the processor (20) is arranged to periodically extract a channel list and output the service information signal.

5. The display apparatus according to claim 1, further comprising a user input means (50), wherein the processor (20) is arranged to extract and output information to the display (30) indicating whether a channel which is input through the user input means (50), among the plurality of channel listed in the channel list, comprises service information.

6. The display apparatus according to claim 5, further comprising a user interface UI generating means (60), wherein the processor is arranged to control the UI generating means (60) to generate a UI indicating the service information signal, and the display (30) is arranged to display the UI.

7. The display apparatus according to claim 6, wherein the processor (20) is arranged to control the UI generating means (60) to generate a UI which corresponds to program guide information.

8. The display apparatus according to claim 6, wherein the processor (20) is arranged to control the UI generating means (60) to generate a UI which corresponds to channel information.

9. The display apparatus according to any preceding claim, wherein a transmitting standard of the service information comprises one of an advanced common application platform (ACAP), an open cable application platform (OCAP) and a multimedia home platform (MHP).

10. An information display method for a display apparatus, comprising:
receiving a video signal;
extracting a channel list and outputting a signal indicating whether service information corresponding to a channel on the channel list is included in the received video signal; and
displaying the extracted channel list and the service information signal.

11. A method according to claim 10, wherein the channel list comprises program guide information.

12. A method according to claim 11, wherein channel list information is received through a separate channel from the video signal.

13. A method according to claim 10, comprising periodically extracting the channel list and outputting the service information signal.

14. A method according to claim 10, comprising displaying a user interface UI indicating whether the service information is included in the video signal.

15. A method according to claim 14, comprising displaying a UI which corresponds to program guide information.

16. A method according to claim 14, comprising displaying a UI which corresponds to channel information.

17. A method according to any one of claims 10 to 16, wherein a standard of transmitting the service information comprises one of an advanced common application platform (ACAP), an open cable application platform (OCAP) and a multimedia home platform (MHP).
